# EUROPÄISCHE PATENTSCHRIFT

(11) **EP 1 275 207 B1**
(45) Veröffentlichungstag und Bekanntmachung des Hinweises auf die Patenterteilung: **29.06.2005**
(21) Anmeldenummer: 01940168.6
(22) Anmeldetag: 18.04.2001
(51) Int. Cl.: H04B 5/00, G08C 17/04, G08C 17/06, H01F 38/14

(54) **ANORDNUNG ZUR ÜBERTRAGUNG ELEKTRISCHER ENERGIE BZW. EINES SIGNALS**
DEVICE FOR TRANSFERRING ELECTRICAL ENERGY OR SIGNALS
DISPOSITIF DE TRANSFERT D'ENERGIE ELECTRIQUE OU DE SIGNAUX

(30) Priorität: 18.04.2000 DE 10019371; 26.05.2000 DE 10026173
(43) Veröffentlichungstag der Anmeldung: 15.01.2003
(73) Patentinhaber: Schleifring und Apparatebau GmbH, 82256 Fürstenfeldbruck (DE)
(72) Erfinder: LOHR, Georg, 82223 Eichenau (DE)
(74) Vertreter: Lohr, Georg, Dr.
(86) Internationale Anmeldenummer: PCT/DE2001/001499
(87) Internationale Veröffentlichungsnummer: WO 2001/080444

(56) Entgegenhaltungen:
- WO-A-98/29919
- DE-A- 4 125 145
- DE-C- 19 705 301
- US-A- 4 792 910
- US-A- 5 451 763

## Beschreibung

### Technisches Gebiet

Die Erfindung bezieht sich auf eine Anordnung zur Übertragung elektrischer Energie bzw. Signale zwischen einer Basisstation und mehreren an verschiedenen Positionen der Basisstation kontaktlos ankoppelbaren externen Einheiten.

### Stand der Technik

Zur Kontaktierung häufig ortsveränderlicher Einrichtungen werden oft mechanische Steckverbindungen eingesetzt. Derartige mechanische Kontaktsysteme sind in einer breiten Typenvielfalt auf dem Markt. Regelmäßig muß ein relativ hoher Aufwand getrieben werden, um die Kontaktsysteme vor Umwelteinflüssen zu schützen. Hier stellen Aspekte wie Berührungsschutz, Schutz vor eindringenden Flüssigkeiten, wie Wasser, Öl oder auch Feuchtigkeit eine wichtige Rolle.

Besondere Anforderungen werden in explosionsgeschützten Bereichen gestellt. Um solchen Anforderungen gerecht zu werden, müssen die Kontakteinrichtungen in aufwendiger und kostenintensiver Weise gekapselt werden. Dadurch vergrößert sich die Bauform wesentlich und die Handhabung wird erschwert. Gerade bei häufigen Steckzyklen weisen solche Steckverbinder gravierende Nachteile auf.

Eine wesentliche Verbesserung stellen hier kontaktlose Verbindungssysteme dar. Kontaktlose auf induktiver Koppelung basierende Übertragungssysteme sind in vielfältigen Ausführungen bekannt. Beispielhaft in der deutschen Patentanmeldung DE 197 01 357 A1 ist ein auf induktiver Koppelung basierendes System beschrieben. Es vermeidet den Hauptnachteil kontaktierender Systeme, hat jedoch relativ hohe Herstellungskosten. Hier ist für jede Übertragungseinrichtung ein eigener Wechselspannungsgenerator und auf der entgegengesetzten Seite ein entsprechender Gleichrichter notwendig. Gerade bei Anlagen mit einer hohen Anzahl von Kontakteinrichtungen führt dies zu untragbar hohen Kosten.

Weitere Systeme sind aus der DE 44 36 592 C2, der DE 196 49 682 A1 oder der DE 197 35 685 A1 bekannt.

### Darstellung der Erfindung

Der Erfindung liegt die Aufgabe zugrunde, eine Anordnung zur kontaktlosen Übertragung anzugeben, die insbesondere bei einer großen Anzahl von Übertragungsstellen kostengünstig realisierbar ist.

Eine erfindungsgemäße Lösung dieser Aufgabe ist im Anspruch 1 angegeben. Weiterbildungen der Erfindung sind Gegenstand der abhängigen Ansprüche.

Diese erfindungsgemäße Anordnung besteht aus jeweils einem Schaltregler pro Kontaktstelle.

Die erfindungsgemäße Anordnung besteht dabei insbesondere aus einer getakteten Stromversorgung zur potentialfreien Energieübertragung, wobei die potentialtrennenden Elemente als kontaktlose Übertragungseinrichtungen ausgeführt sind. Dem Stand der Technik entsprechende potentialtrennende Stromversorgungen besitzen in der Regel eine primärseitige Leistungsschaltstufe, welche eine Wechselspannung erzeugt. Diese wird dann mittels eines potentialtrennenden Transformators auf die Sekundärseite übertragen. Dort erfolgt eine Gleichrichtung und Messung der Ausgangsgrößen. Aus diesen wiederum wird ein Rückkoppelsignal erzeugt, welches potentialfrei auf die Primärseite zur Steuerung des Leistungsgenerators übertragen wird. Derartige Anordnungen besitzen zwei Strecken in denen eine Potentialtrennung notwendig ist. Dies ist einerseits der Pfad des Leistungsflusses von der Primär- auf die Sekundärseite und andererseits der Rückkoppelpfad zur Regelung einer konstanten Ausgangsgröße von der Sekundär- auf die Primärseite. Bei einer erfindungsgemäßen kontaktlosen Übertragungseinrichtung werden nun beide potentialtrennenden Strecken durch berührungslose Übertragungselemente ersetzt. Im Falle des Leistungspfades wird der ohnehin schon vorhandene potentialtrennende Transformator aufgesplittet in zwei Teile, wobei jedes dieser Teile eine Wicklung und einen Ferrit- bzw. Eisenkern zur Steuerung des magnetischen Flusses enthält. Primär- und Sekundärseite können nun auf einfache Weise voneinander getrennt und wieder zusammengesetzt werden. Im Falle der potential getrennten Rückkoppelstrecke von der Sekundär- auf die Primärseite erfolgt die Übertragung vorzugsweise über ein kapazitives Koppelelement. Alternativ kann diese Information aber auch induktiv oder optisch übertragen werden. Bevorzugte kapazitive Koppelelemente sind Gegenstand der deutschen Patentanmeldung DE 197 00 110 A1.

In einer besonders vorteilhaften Ausgestaltung der Erfindung wird die Schaltung zur Energieübertragung als Resonanzwandler ausgeführt. Derartige Wandler haben hier wesentliche Vorteile. Auftrennbare Transformatoren, bei denen Primär- und Sekundärseite voneinander getrennt werden können haben durch den meist schwankenden Luftspalt zwischen Primär- und Sekundärseite eine variable Streuinduktivität. Diese begrenzt durch ihre Impedanz den Stromfluss im Übertrager. Wird diese Streuinduktivität durch eine entsprechende Kapazität kompensiert, so kann im Resonanzfall eine beliebig niedrige Impedanz erreicht werden. Durch Ausnutzung dieses Effektes können Resonanzwandler hier wesentlich effizienter arbeiten.

Eine andere Ausgestaltung der Erfindung besteht darin, dass diese kapazitiven Koppelelemente im unmittelbaren Koppelbereich der induktiven Koppelelemente angeordnet sind. Durch eine solche Anordnung ist ein sehr platzsparender Aufbau möglich, da für die kapazitive Koppeleinrichtung kein zusätzlicher Platz benötigt wird. Eine solche Anordnung der kapazitiven Koppelelemente im magnetischen Feld der induktiven Übertragungseinrichtung ermöglicht eine unabhängige Übertragung beider Signale. Dies ist in der erfindungsgemäßen Anordnung problemlos möglich, da sich elektrische und magnetischen Felder gegenseitig nicht beeinflussen.

Wird in einer weiteren vorteilhaften Ausgestaltung der Erfindung die kapazitive Koppeleinrichtung hier als Leiterplatte ausgeführt, so bietet sie einen zusätzlichen mechanischen Schutz der induktiven Koppeleinrichtung. Im Gegensatz zu der in der deutschen Offenlegungsschrift DE 4125145 dargestellten Anordnung, stellt die erfindungsgemäße Anordnung eine vollständige Abdeckung des induktiven Koppelelements dar.

### Kurze Beschreibung der Zeichnung

Die Erfindung wird nachstehend ohne Beschränkung des allgemeinen Erfindungsgedankens anhand von Ausführungsbeispielen unter Bezugnahme auf die Zeichnung exemplarisch beschrieben, auf die im übrigen hinsichtlich der Offenbarung aller im Text nicht näher erläuterten erfindungsgemäßen Einzelheiten ausdrücklich verwiesen wird. Es zeigen:

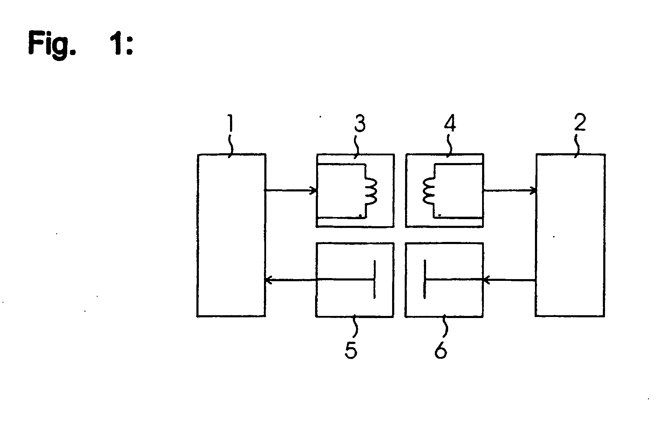

- Fig. 1: ein beispielhaftes Blockschaltbild einer erfindungsgemäßen Anordnung.

### Darstellung eines Ausfürhungsbeispiels

In Fig. 1 ist beispielhaft eine erfindungsgemäße Anordnung dargestellt. Die primärseitige Beschaltung (1) einer potentialgetrennten Stromversorgung wird über kontaktlose Koppelelemente mit der sekundärseitigen Beschaltung verbunden. Im Leistungspfad zur Energieübertragung wird ein Transformator, dessen Primärseite (3) von der Sekundärseite (4) mechanisch trennbar ist, verwendet. Der Signalfluß zur Rückkoppelung der Ausgangsgröße erfolgt in diesem Beispiel mittels eines kapazitiven Koppelelementes, dessen Sendeseite (6) Signale von der sekundärseitigen Beschaltung (2) mittels der Empfangsseite (5) an die primärseitigen Beschaltung (1) weiterleitet.

## Patentansprüche

1. Anordnung mit einer Zentraleinheit (1) mit einem Leistungsgenerator und mit mindestens einer externen Einheit (2) zur Übertragung elektrischer Energie bzw. Signale zwischen der Zentraleinheit (1) und der mindestens einen, an eine Anschlussposition der Zentraleinheit (1) kontaktlos ankoppelbaren externen Einheit (2), wobei an der Anschlussposition der Zentraleinheit (1) die primärseitige Beschaltung einer potentialgetrennten Stromversorgung vorhanden ist, jede der mindestens einen externen Einheiten (2) eine entsprechende sekundärseitige Beschaltung enthält und zur Leistungsübertragung ein induktives Koppelelement (3, 4) vorhanden ist, welches den sonst in einer derartigen Stromversorgung eingesetzten Transformator ersetzt, und ein weiteres kontaktloses Koppelelement (5, 6) zur Übertragung von Rückkopplungssignalen von jeder der mindestens einen externen Einheiten (2) zur Zentraleinheit (1) zurück vorhanden ist, **dadurch gekennzeichnet**
**dass** die Zentraleinheit (1) zur Ankopplung von mehreren externen Einheiten (2) verschiedene derartiger Anschlusspositionen aufweist und
**dass** der Leistungsgenerator durch die Rückkopplungssignale steuerbar ist.

2. Anordnung nach Anspruch 1,
**dadurch gekennzeichnet, dass** die primärseitige (1) sowie die sekundärseitige Beschaltung (2) der potentialgetrennten Stromversorgung einem Resonanzwandler entspricht.

3. Anordnung nach Anspruch 1 oder 2,
**dadurch gekennzeichnet, dass** das Koppelelement zur Signalrückkopplung (5, 6) ein induktives, kapazitives oder optisches Koppelelement ist.

4. Anordnung nach einem der Ansprüche 1 bis 3,
**dadurch gekennzeichnet, dass** kapazitive Koppelelemente zur Übertragung der Rückkopplungssignale im Bereich des magnetischen Feldes des induktiven Koppelelementes angeordnet sind.

5. Anordnung nach Anspruch 4,
**dadurch gekennzeichnet, dass** die kapazitiven Koppelelemente in eine Leiterplatte integriert sind, welche gleichzeitig eine mechanische Abdeckung der induktiven Koppelelemente darstellt.

## Claims

1. Arrangement comprising a central unit (1) with a power generator and at least one external unit (2) for transmission of electrical energy or signals between the central unit (1) and the at least one external unit (2) that is adapted to be coupled without contact to a connecting position of the central unit (1); in which: primary side circuitry of a current supply having a separate potential is provided at the connecting position of the central unit (1); each of the at least one external units (2) contains corresponding secondary side circuitry, and an inductive coupler element (3, 4) is provided for power transmission to replace the transformer usually employed in a current supply of this kind; and another non-contacting coupler element (5, 6) is provided for transmission of feedback signals from each of the at least one external units (2) back to the central unit (1); **characterized in that** the central unit (1) has various connecting positions of this kind for coupling to a plurality of external units (2); and that the power generator is adapted to be controlled by the feedback signals.

2. Arrangement according to claim 1,
**characterized in that** both the primary side (1) circuitry and the secondary side circuitry (2) of the current supply of separate potential corresponds to that of a resonance converter.

3. Arrangement according to claim 1 or 2,
**characterized in that** the coupler element (5, 6) for signal feedback is an inductive, a capacitive, or an optical coupler element.

4. Arrangement according to any one of claims 1 to 3,
**characterized in that** capacitive coupler elements for transmitting the feedback coupling signals are disposed within the range of the magnetic field of the inductive coupler element.

5. Arrangement according to claim 4,
**characterized in that** the capacitive coupler elements are incorporated in a printed circuit board that at the same time acts as a mechanical cover for the inductive coupler elements.

## Revendications

1. Dispositif à une unité centrale (1) à une génératrice de puissance et à au moins une unité extérieure (2) à transférer de l'énergie électrique ou respectivement des signaux entre ladite unité centrale (1) et ladite au moins une unité extérieure (2) apte à être couplée sans contact à une position d'accouplement à ladite unité centrale (1), dans lequel le câblage du côté primaire d'un bloc d'alimentation à isolement de potentiel est disposé à la position d'accouplement de ladite unité centrale (1), dans lequel chacune desdites unités extérieures (2), dont au moins une est disposée, contient un câblage correspondant du côté secondaire, et dans lequel un élément coupleur inductif (3, 4) est présent pour le transfert de puissance, qui remplace le transformateur utilisé autrefois dans un tel bloc d'alimentation, et comprenant un autre élément coupleur sans contact (5, 6) pour le transfert des signaux de rétroaction à partir de chaque au moins une unité extérieur (2) en retour à ladite unité centrale (1), **caractérisé en ce**
**que** ladite unité centrale (1) comprend plusieurs positions d'accouplement de ce type afin de coupler plusieurs unités extérieures (2), et en ce que ladite génératrice de puissance est commandable par les signaux de rétraction.

2. Dispositif selon la revendication 1,
**caractérisé en ce que** le câblage (1) du côté primaire ainsi que le câblage (2) du côté secondaire dudit bloc d'alimentation à isolement de potentiel correspond à un transducteurs à circuits accordés.

3. Dispositif selon la revendication 1 ou 2,
**caractérisé en ce que** ledit élément coupleur pour le rétrocouplage de signaux (5, 6) est un élément coupleur inductif, capacitif ou optique.

4. Dispositif selon une quelconque des revendications 1 à 3,
**caractérisé en ce que** des éléments coupleurs capacitifs pour le transfert des signaux de rétroaction sont disposés dans la zone du champ magnétique dudit élément coupleur inductif.

5. Dispositif selon la revendication 4,
**caractérisé en ce que** lesdits éléments coupleurs capacitifs sont intégrés dans un module de circuits imprimés, qui constitue, en même temps, un recouvrement mécanique des éléments coupleurs inductifs.
